# EUROPÄISCHE PATENTSCHRIFT

(11) **EP 2 879 057 B1**
(45) Veröffentlichungstag und Bekanntmachung des Hinweises auf die Patenterteilung: **01.08.2018**
(21) Anmeldenummer: 14003942.1
(22) Anmeldetag: 24.11.2014
(51) Int. Cl.: G06F 12/02, G06F 13/16

(54) **Verfahren zum Betreiben eines Speichersystems sowie ein solches Speichersystem**
Method for operating a storage system and such a storage system
Procédé de fonctionnement d'un système de stockage et système de stockage

(30) Priorität: 27.11.2013 DE 102013019941
(43) Veröffentlichungstag der Anmeldung: 03.06.2015
(73) Patentinhaber: Giesecke+Devrient Mobile Security GmbH, 81677 München (DE)
(72) Erfinder: Hockauf, Manfred, 85617 Aßling (DE)

(56) Entgegenhaltungen:
- DE-A1- 10 321 104
- US-A1- 2013 013 885
- US-A1- 2013 185 485

## Beschreibung

### Gebiet der Erfindung

Die Erfindung betrifft generell Speichersysteme für digitale Daten. Insbesondere betrifft die Erfindung ein Verfahren zum Betreiben eines wieder beschreibbaren, nichtflüchtigen Speichersystems, mit dem der Verschleiß von Speicherbereichen des Speichersystems im Wesentlichen über sämtliche Speicherbereiche gleichmäßig verteilt werden kann, sowie ein solches Speichersystem. Ferner betrifft die Erfindung ein Sicherheitselement, vorzugsweise eine Chipkarte, mit einem solchen Speichersystem.

### Hintergrund der Erfindung

Die Verwendung von wieder beschreibbaren, nichtflüchtigen Speichersystemen in Form von Flash-Speichersystemen hat aufgrund der kompakten physikalischen Größe von derartigen Speichersystemen in der letzten Zeit stark zugenommen. Ein Grund hierfür ist, dass die kompakte Größe von Flash-Speichersystemen es erlaubt, derartige Speichersysteme in einer Vielzahl von Vorrichtungen einzusetzen, bei denen eine Prozessoreinheit auf digitale Daten zugreift, wie beispielsweise Mobiltelefone, Tablet-Computer, Laptops, PCs, Digitalkameras, MP3-Player, und dergleichen.

Neben den vorstehend genannten Einsatzgebieten finden wieder beschreibbare, nichtflüchtige Speichersysteme in Form von Flash-Speichersystemen auch zunehmend Einsatz bei sogenannten Sicherheitselementen ("Secure Elements"), die beispielsweise in Form von SIM-Karten zum Nachweis einer Zugangsberechtigung zu einem Mobilfunknetz oder in Form von Chipkarten zur Durchführung von Transaktionen des elektronischen Zahlungsverkehrs verwendet werden. Der Einsatz erfolgt dabei häufig im Zusammenspiel mit einem für die jeweilige Anwendung vorgesehenen Lese- bzw. Endgerät, beispielsweise einem Mobiltelefon oder einem Bezahlterminal. In der Regel verfügt ein solches Sicherheitselement ebenfalls über eine Prozessoreinheit, auf der wenigstens eine Applikation zur Ausführung der Anwendung läuft. Viele Sicherheitselemente sind hierzu neben einer Applikation mit einem Betriebssystem ausgestattet, wobei der Programmcode der Applikation sowie der Programmcode, der das Betriebssystem darstellt, in dem Flash-Speichersystem des Sicherheitselements gespeichert sind und im Betrieb von deren Prozessoreinheit ausgeführt werden.

Ein Flash-Speichersystem besteht in der Regel aus einer Vielzahl von Seiten, sogenannten "Pages", die beispielsweise jeweils ein Datenvolumen von 512 Bytes aufweisen. Aus technischen Gründen kann eine Page eines Flash-Speichersystems nur eine begrenzte Anzahl von Schreibvorgängen absolvieren, je nach Qualität des Flash-Speichersystems beispielsweise maximal 100.000 Schreibvorgänge, wodurch die Lebensdauer eines Flash-Speichersystems beschränkt ist. Um die Lebensdauer eines Flash-Speichersystems zu verlängern, ist es bekannt, mittels einer Flash-Translation-Layer (FTL) Schreibvorgänge auf die unterschiedlichen Pages des Flash-Speichersystems so zu verteilen, dass jede Page möglichst gleich häufig beschrieben wird, was dem Fachmann unter dem Begriff "Wear Leveling" bekannt ist. Dabei können durch das "Wear Leveling" bereits sehr häufig beschriebene Pages des Flash-Speichersystems über bestimmte Zeiträume von der FTL im Wesentlichen vollständig blockiert werden und andere bisher nicht so häufig beschriebene Pages verstärkt zur Speicherung von Daten verwendet werden.

Hierzu ist es beispielsweise bekannt, eine Zuordnungstabelle ("Mapping Table") zu pflegen, der sich die Zuordnungen der von einer Prozessoreinheit adressierbaren logischen Pages eines Flash-Speichersystems zu dessen physikalischen Pages entnehmen lassen. Nun ist es bei Sicherheitselementen in der Regel so, dass eine solche Zuordnungstabelle wiederum nur im Flash-Speichersystem selbst vorgehalten werden kann, was aufgrund der häufig wechselnden Zuordnungen der logischen Pages zu den physikalischen Pages eines Flash-Speichersystems eine zusätzliche Abnutzung des Flash-Speichersystems zur Folge hat.

Das Dokument DE10321104 beschreibt ein verfahren für ein Speichersystem, wobei nach jeder Datenänderung eine Instanz der aktuellen Daten in eine der Seiten abgelegt, wobei die Seiten sequentiell aufsteigend bezüglich ihrer Adresse belegt werden.

Vor diesem Hintergrund stellt sich der vorliegenden Erfindung die Aufgabe, ein verbessertes Verfahren zum Betreiben eines wieder beschreibbaren, nichtflüchtigen Speichersystems, mit dem der Verschleiß von Speicherbereichen des Speichersystems im Wesentlichen über sämtliche Speicherbereiche gleichmäßig verteilt werden kann, sowie ein solches Speichersystem insbesondere für Sicherheitselemente bereitzustellen.

### Zusammenfassung der Erfindung

Die vorstehende Aufgabe wird durch den Gegenstand der unabhängigen Ansprüche gelöst. Bevorzugte Ausführungsformen der Erfindung sind in den abhängigen Ansprüchen definiert.

Gemäß einem ersten Aspekt der Erfindung wird ein Verfahren zum Betreiben eines wieder beschreibbaren, nichtflüchtigen Speichersystems mit einer Vielzahl von physikalischen Pages bereitgestellt. Dabei umfasst das Verfahren die folgenden Schritte: in einem ersten Zustand das Zuordnen jeweils einer logischen Page einer Vielzahl von logischen Pages zu jeweils einer physikalischen Page zumindest einer Teils der Vielzahl von physikalischen Pages, wobei die Vielzahl von logischen Pages aus logischen Pages, auf welche eine, vorzugsweise auf einer Prozessoreinheit laufende, Anwendung zugreifen kann, und aus wenigstens einer logischen Page besteht, auf welche die, vorzugsweise auf der Prozessoreinheit laufende, Anwendung nicht zugreifen kann, wobei eine der logischen Pages, auf welche die, vorzugsweise auf der Prozessoreinheit laufende, Anwendung zugreifen kann, als Referenzpage dient und die wenigstens eine logische Page, auf welche die, vorzugsweise auf der Prozessoreinheit laufende, Anwendung nicht zugreifen kann, als Buffer-Speicher dient; und in späteren Zuständen das Ändern der Zuordnungen der logischen Pages zu den physikalischen Pages zumindest eines Teils der Vielzahl von physikalischen Pages gemäß einer feststehenden Regel, mittels der sich in jedem der späteren Zustände die aktuellen Zuordnungen der logischen Pages zu den physikalischen Pages zumindest eines Teils der Vielzahl von physikalischen Pages allein aus den aktuellen Zuordnungen der Referenzpage und des Buffer-Speichers zu den physikalischen Pages zumindest eines Teils der Vielzahl von physikalischen Pages ableiten lassen.

Gemäß einem zweiten Aspekt der Erfindung wird ein wieder beschreibbares, nichtflüchtiges Speichersystem mit einer Vielzahl von physikalischen Speicherseiten bereitgestellt. Dabei ist das Speichersystem dazu ausgestaltet, in einem ersten Zustand jeweils einer logischen Page einer Vielzahl von logischen Pages jeweils einer physikalischen Page der Vielzahl von physikalischen Pages zumindest eines Teils der Vielzahl von physikalischen Pages zuzuordnen, wobei die Vielzahl von logischen Pages aus logischen Pages, auf welche eine, vorzugsweise auf einer Prozessoreinheit laufende, Anwendung zugreifen kann, und aus wenigstens einer logischen Page besteht, auf welche die, vorzugsweise auf der Prozessoreinheit laufende, Anwendung nicht zugreifen kann, wobei eine der logischen Pages, auf welche die, vorzugsweise auf der Prozessoreinheit laufende, Anwendung zugreifen kann, als Referenzpage dient und die wenigstens eine logische Page, auf welche die, vorzugsweise auf der Prozessoreinheit laufende, Anwendung nicht zugreifen kann, als Buffer-Speicher dient; und in späteren Zuständen die Zuordnungen der logischen Pages zu den physikalischen Pages zumindest eines Teils der Vielzahl von physikalischen Pages gemäß einer feststehenden Regel zu ändern, mittels der sich in jedem der späteren Zustände die aktuellen Zuordnungen der logischen Pages zu den physikalischen Pages zumindest eines Teils der Vielzahl von physikalischen Pages allein aus den aktuellen Zuordnungen der Referenzpage und des Buffer-Speichers zu den physikalischen Pages zumindest eines Teils der Vielzahl von physikalischen Pages ableiten lassen.

Gemäß einem dritten Aspekt der Erfindung wird ein Sicherheitselement mit einem wieder beschreibbaren, nichtflüchtigen Speichersystem gemäß dem zweiten Aspekt der Erfindung bereitgestellt.

Vorzugsweise werden die Zuordnungen der logischen Pages zu den physikalischen Pages zumindest eines Teils der Vielzahl von physikalischen Pages gemäß einer feststehenden Regel derart geändert, dass über einen durch die Zustände definierten Zeitraum der Buffer-Speicher jeweils im Wesentlichen sämtlichen physikalischen Pages zumindest eines Teils der Vielzahl von physikalischen Pages wenigstens einmal zugeordnet wird.

Alternativ oder zusätzlich können die Zuordnungen der logischen Pages zu den physikalischen Pages zumindest eines Teils der Vielzahl von physikalischen Pages gemäß einer feststehenden Regel derart geändert werden, dass über einen durch die Zustände definierten Zeitraum die logischen Pages, auf welche die auf der Prozessoreinheit laufende Anwendung zugreifen kann, jeweils im Wesentlichen sämtlichen physikalischen Pages zumindest eines Teils der Vielzahl von physikalischen Pages wenigstens einmal zugeordnet werden.

Wahlweise kann der Buffer-Speicher aus zwei oder mehr logischen Pages besteht.

Gemäß bevorzugter Ausführungsformen der Erfindung wird der Buffer-Speicher als Zwischenspeicher zur Durchführung von atomaren Schreibvorgängen im Speichersystem verwendet.

Vorzugsweise ist in den physikalischen Pages zumindest eines Teils der Vielzahl von physikalischen Pages jeweils ein Kontrollattribut hinterlegt, wobei das Kontrollattribut einer jeweiligen physikalischen Page zumindest eines Teils der Vielzahl von physikalischen Pages Informationen darüber enthält, ob es sich bei der dieser physikalischen Page zugeordneten logischen Page um eine logische Page handelt, auf welche die auf der Prozessoreinheit laufende Anwendung zugreifen kann, oder um eine logische Page, die den Buffer-Speicher bildet oder Teil dieses Buffer-Speichers ist, welche logische Page dieser physikalischen Page zugeordnet ist und/ oder ob die dieser physikalischen Page zugeordnete logische Page für atomare Schreibvorgänge verwendet werden kann oder die dort vorliegenden Daten noch gesichert werden müssen.

Gemäß bevorzugter Ausführungsformen der Erfindung besteht die Regel, mittels der sich zu jedem der späteren Zeitpunkte die aktuellen Zuordnungen der logischen Pages zu den physikalischen Pages zumindest eines Teils der Vielzahl von physikalischen Pages aus den aktuellen Zuordnungen der Referenzpage und des Buffer-Speichers zu den physikalischen Pages ableiten lassen, darin, dass bei jedem Zustandsübergang der Buffer-Speicher der physikalischen Page zugeordnet wird, der bisher die nächst niedriger liegende logische Page zugeordnet gewesen ist, und umgekehrt, und dass, falls sich der Buffer-Speicher bereits an der niedrigsten Stelle befindet und somit nicht weiter in Richtung niedriger liegender logischer Pages wandern kann, der Buffer-Speicher die Zuordnung mit der nunmehr am höchsten liegenden logischen Page tauscht.

Vorzugsweise wird ein Teil der Vielzahl von physikalischen Pages zur Speicherung von veränderlichen Daten und ein anderer Teil der Vielzahl von physikalischen Pages zur Speicherung von unveränderlichen Daten, insbesondere Applikationscode, werden.

Wie der Fachmann erkennt, lassen sich die vorstehend beschriebenen bevorzugten Ausgestaltungen im Rahmen des ersten Aspekts der Erfindung, d.h. im Rahmen des Verfahrens zum Betreiben eines wieder beschreibbaren, nichtflüchtigen Speichersystems mit einer Vielzahl von physikalischen Pages, im Rahmen des zweiten Aspekts der Erfindung, d.h. im Rahmen eines solchen wieder beschreibbaren, nichtflüchtigen Speichersystems mit einer Vielzahl von physikalischen Pages, sowie im Rahmen des dritten Aspekts der Erfindung, d.h. im Rahmen des Sicherheitselements mit einem solchen wieder beschreibbaren, nichtflüchtigen Speichersystem, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines erfindungsgemäßen Speichersystems als Teil eines Sicherheitselements in Kommunikation mit einer externen Instanz in Form eines Lesegeräts und
- Fig. 2: eine schematische Darstellung von physikalischen und logischen Pages des Speichersystems von Figur 1 im Betrieb gemäß einer bevorzugten Ausführungsform der Erfindung.

### Detaillierte Beschreibung von bevorzugten Ausführungsformen

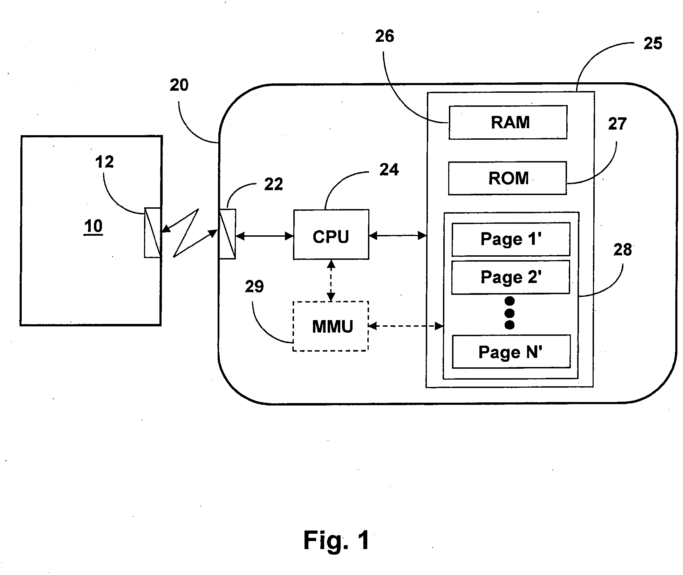

Figur 1 zeigt eine schematische Darstellung eines erfindungsgemäßen wieder beschreibbaren, nichtflüchtigen Speichersystems 28 als Teil eines beispielhaften Sicherheitselements ("Secure Element") 20 in Form einer Chipkarte in Kommunikation mit einer externen Instanz in Form eines Lesegeräts bzw. Terminals 10. Vorzugsweise handelt es sich bei dem wieder beschreibbaren, nichtflüchtigen Speichersystem 28 um ein Flash-Speichersystem (Flash-EEPROM). Dabei kann es sich beispielsweise um ein Flash-Speichersystem mit einer NAND- oder einer NOR-Architektur handeln. Bei dem Sicherheitselement in Form einer Chipkarte 20 kann es sich beispielsweise um eine in ein Mobiltelefon entnehmbar eingesetzte oder fest eingebaute SIM-Karte handeln, die dem Fachmann auch als eUICC (embedded Universal Integrated Circuit Card) bekannt ist.

Das in Figur 1 dargestellte Sicherheitselement in Form einer Chipkarte 20 ist dazu ausgestaltet mit dem Lesegerät 10 Daten auszutauschen. Das Lesegerät 10 kann beispielsweise Teil eines Mobiltelefons sein. Als ein Austausch von Daten wird hier eine Signalübertragung, eine wechselseitige Steuerung und in einfachen Fällen auch eine Verbindung zwischen dem Lesegerät 10 und der Chipkarte 20 verstanden. In der Informationstheorie wird ein Datenaustausch insbesondere durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht, d.h. die auszutauschenden Daten dekodieren kann.

Zur Datenübertragung bzw. Kommunikation zwischen der Chipkarte 20 und dem Lesegerät 10 weisen sowohl die Chipkarte 20 als auch das Lesegerät 10 geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und dem Lesegerät 10 kontaktlos, d.h. über die Luftschnittstelle bzw. over-the-air (OTA), erfolgt, wie dies in Figur 1 durch den gezackten Pfeil angedeutet ist. Alternativ kann die Chipkarte 20 über die Schnittstelle 22 galvanisch, d.h. kontaktbehaftet, mit der Schnittstelle 12 des Lesegeräts 10 verbunden werden. In diesem Fall ist die Schnittstelle 22 in der Regel als ein auf einer Seite der Chipkarte 20 angeordnetes Kontaktfeld mit Kontaktflächen zum Datenaustausch mit dem Lesegerät 10 ausgebildet. Selbstverständlich kann die vorliegende Erfindung auch bei Sicherheitselementen in Form von Chipkarten zum Einsatz kommen, die sowohl eine Schnittstelle zur kontaktbehafteten als auch eine Schnittstelle zur kontaktlosen Kommunikation mit einem Lesegerät aufweisen und die dem Fachmann als Dual-Interface-Chipkarten bekannt sind.

Neben der Schnittstelle 22 zur Kommunikation mit dem Lesegerät 10 umfasst die Chipkarte 20 eine zentrale Prozessor- bzw. Recheneinheit (CPU; auch Prozessor genannt) 24, die in Kommunikationsverbindung mit der Schnittstelle 22 steht. Der Prozessor 24 steht ferner mit einem Speicher 25 in Verbindung, der optional einen flüchtigen Arbeitsspeicher (RAM) 26 und/oder ein ROM 27 umfassen kann. Ferner umfasst der Speicher 25 das bereits vorstehend erwähnte wieder beschreibbare, nichtflüchtige Speichersystem 28.

Wie dies dem Fachmann bekannt ist, kann die Kommunikation zwischen der zentralen Prozessoreinheit 24 und dem Speicher 25 des Sicherheitselements 20 beispielsweise über ein oder mehrere Adress-, Daten- und/ oder Steuer-Bussysteme erfolgen, wie dies in Figur 1 schematisch durch einen Doppelpfeil angedeutet ist. Falls das Sicherheitselement 20 fest in das Lesegerät 10 eingebaut ist, beispielsweise im Fall einer fest in ein Mobiltelefon eingebauten SIM-Karte, kann auch die Kommunikation zwischen dem Sicherheitselement 20 und dem das Lesegerät 10 enthaltenden Mobiltelefon über ein oder mehrere derartige Bussysteme erfolgen.

Das vorzugsweise als Flash-Speichersystem ausgestaltete Speichersystem 28 besteht aus einer Vielzahl von physikalischen Pages bzw. Seiten, die wiederum zu Blöcken zusammengefasst sein können und von denen in Figur 1 beispielhaft die Pages 1', 2' und N' dargestellt sind. Diese Pages 1' bis N' können beispielsweise jeweils eine Speicherkapazität von 256 oder 512 Bytes aufweisen.

Den in Figur 1 dargestellten physikalischen Pages 1' bis N' sind entsprechende logische Pages zugeordnet, auf welche die Prozessoreinheit 24 zugreifen kann, beispielsweise indem Daten in die logischen Pages geschrieben und/ oder aus diesen ausgelesen werden. Wie dies dem Fachmann bekannt ist, kann die Zuordnung zwischen den physikalischen Pages und den für die auf der Prozessoreinheit 24 laufenden Anwendungen "sichtbaren" logischen Pages des Speichersystems 28 softwaretechnisch und/oder hardwaretechnisch realisiert sein, beispielsweise mittels einer Flash-Translation-Layer (FTL), die Teil eines Betriebssystems des Sicherheitselements 20 ist, und/ oder der in Figur 1 angedeuteten Speicherverwaltungseinheit (Memory Management Unit; MMU) 29. Dem Fachmann ist bekannt, dass es sich bei einer Flash-Translation-Layer (FTL) in der Regel um eine Software-Schicht handelt, die oberhalb der eigentlichen Speicher-Hardware liegt und herkömmlicherweise dazu dient, einen "Wear Leveling"-Mechanismus zu implementieren. Ein solcher "Wear Leveling"-Mechanismus dient dazu, die Schreibzugriffe auf die logischen Pages des Speichersystems 28 so zu verteilen, dass jede physikalische Page möglichst gleich häufig beschrieben wird.

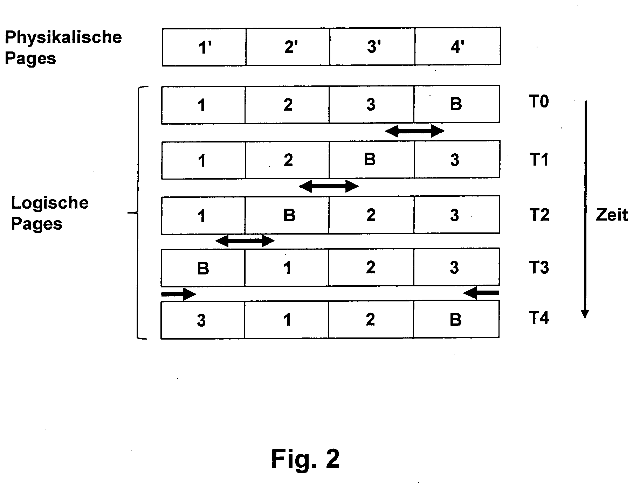

Unter weiterer Bezugnahme auf Figur 2 wird nachstehend beschrieben, wie das Speichersystem 28 gemäß einer bevorzugten Ausführungsform der Erfindung betrieben wird. In Figur 2 sind beispielhaft vier aufeinanderfolgende bzw. benachbarte physikalische Pages des Speichersystems 28 dargestellt, und zwar die physikalischen Pages 1', 2', 3' und 4' (d.h. in diesem Beispiel ist N gleich 4). Selbstverständlich wird in der Praxis ein Flash-Speichersystem in der Regel mehr als die vier in Figur 2 dargestellten physikalischen Pages umfassen, beispielsweise 128, 256 oder 512 physikalische Pages, wie dies in Figur 1 angedeutet ist.

Wie bereits vorstehend beschrieben wurde, sind den physikalischen Pages 1' bis 4', beispielsweise mittels einer FTL und/oder der MMU 29 entsprechende logische Pages derart zugeordnet, dass eine auf der Prozessoreinheit 24 laufende Anwendung auf diese logischen Pages zugreifen kann, d.h. Daten in die logischen Pages schreiben und/oder von diesen abrufen kann. Erfindungsgemäß ist bei der in Figur 2 dargestellten bevorzugten Ausführungsform in einem ersten Zustand zu einem Zeitpunkt T0 eine erste logische Page 1 der physikalischen Page 1', eine zweite logische Page 2 der physikalischen Page 2' und eine dritte logische Page 3 der physikalischen Page 3' zugeordnet. Erfindungsgemäß ist nun eine weitere logische Page als Buffer-Speicher B vorgesehen, die sich dadurch auszeichnet, dass der Buffer-Speicher B im Gegensatz zu den logischen Pages 1 bis 3 für eine auf der Prozessoreinheit 24 laufende Anwendung nicht sichtbar ist und auf diesen somit von einer auf der Prozessoreinheit 24 laufenden Anwendung nicht zugegriffen werden kann. Zum ersten Zustand zum Zeitpunkt T0 ist der Buffer-Speicher B der physikalischen Page 4' zugeordnet, was zur Folge hat, dass in diesem ersten Zustand die physikalische Page 4' nicht durch Speicheroperationen abgenutzt werden kann, da, wie bereits vorstehend beschrieben, ein Zugriff auf den Buffer-Speicher B nicht möglich ist.

Erfindungsgemäß ist nun weiter vorgesehen, dass die vorstehend beschriebenen Zuordnungen zwischen den logischen Pages und den physikalischen Pages im Betrieb des Speichersystems 28 von Zeit zu Zeit gemäß einer feststehenden Regel derart geändert werden, dass über einen bestimmten Zeitraum, der beispielsweise durch eine bestimmte Anzahl von Speicherzugriffen definiert sein kann, wenigstens der Buffer-Speicher B und vorzugsweise jede logische Page vorzugsweise allen physikalischen Pages 1' bis 4' des Speichersystems 28 wenigstens einmal zugeordnet wird, was sicherstellt, dass die Abnutzung durch Zugriffe über alle physikalischen Pages 1' bis 4' gleich verteilt wird. Dabei ist erfindungsgemäß die Regel so gewählt, dass sich mittels dieser Regel zu jedem Zeitpunkt die Zuordnungen aller logischen Pages zu den physikalischen Pages aus den jeweiligen Zuordnungen einer Referenzpage, vorzugsweise der logischen Page 1, und dem Buffer-Speicher B zu den physikalischen Pages ableiten lassen.

Um das Auffinden einer Referenzpage und des Buffer-Speichers B mittels eines Suchalgorithmus und damit das Ableiten der Zuordnungen aller logischen Pages zu den physikalischen Pages aus den jeweiligen Zuordnungen einer Referenzpage, vorzugsweise der logischen Page 1, und dem Buffer-Speicher B zu den physikalischen Pages zu vereinfachen, ist erfindungsgemäß vorzugsweise vorgesehen, dass alle physikalischen Pages ein Kontrollattribut aufweisen, das vorzugsweise Informationen über den Typ der logischen Page, die momentan dieser physikalischen Page zugeordnet ist (also ob es sich um eine logische Page handelt, auf die eine auf der Prozessoreinheit 24 laufende Anwendung zugreifen kann, oder um eine logische Page, die den Buffer-Speicher B bildet oder Teil dieses Buffer-Speichers B ist) und die Nummer der entsprechenden logischen Page enthält. Ferner kann für den Fall, dass die einer physikalischen Page zugeordnete logische Page den Buffer-Speicher B bildet oder Teil dieses Buffer-Speichers B ist, das Kontrollattribut einer solchen physikalischen Page Informationen darüber enthalten, ob die entsprechende logische Page für atomare Schreibvorgänge verwendet werden kann oder die dort vorliegenden Daten noch gesichert werden müssen, wie dies nachstehend detaillierter beschrieben wird.

Bei der in Figur 2 dargestellten bevorzugten Ausführungsform besteht die Regel, mittels der sich die Zuordnungen sämtlicher logischer Pages zu den physikalischen Pages aus der Zuordnung der logischen Page 1 und der Zuordnung des Buffer-Speichers B zu entsprechenden physikalischen Pages ableiten lassen, darin, dass der Buffer-Speicher B bei jedem Zustandsübergang mit einer Schrittweite von einer logischen Page in Richtung niedriger liegender logischer Pages wandert. Anders ausgedrückt, besteht die Regel darin, bei jedem Zustandsübergang den Buffer-Speicher B der physikalischen Page zuzuordnen, der bisher die nächst niedriger liegende logische Page zugeordnet gewesen ist, und umgekehrt.

Gemäß dieser Regel ergeben sich bei den in Figur 2 dargestellten Zustands-übergängen die folgenden Zuordnungsänderungen. Bei dem in Figur 2 dargestellten Übergang vom Zustand des Speichersystems 28 zum Zeitpunkt T0 zum Zustand zum Zeitpunkt T1 erfolgt ein Austausch der Zuordnungen der logischen Page 3 mit dem Buffer-Speicher B, d.h. die Zuordnungen logische Page 1 → physikalische Page 1', logische Page 2 → physikalische Page 2', logische Page 3 → physikalische Page 3' und Buffer-Speicher B → physikalische Page 4' im Zustand zum Zeitpunkt T0 führen zu den Zuordnungen logische Page 1 → physikalische Page 1', logische Page 2 → physikalische Page 2', Buffer-Speicher B → physikalische Page 3' und logische Page 3 → physikalische Page 4' im Zustand zum Zeitpunkt T1. Der Fachmann wird erkennen, dass nunmehr im Zustand zum Zeitpunkt T1 die physikalische Page 3' nicht durch Speicheroperationen abgenutzt wird, da in diesem Zustand der Buffer-Speicher B der physikalischen Page 3' zugeordnet ist und, wie bereits vorstehend beschrieben, ein Zugriff auf den Büffer-Speicher B durch eine auf der Prozessoreinheit 24 laufende Anwendung nicht möglich ist.

Bei dem in Figur 2 dargestellten Übergang vom Zustand zum Zeitpunkt T1 zum Zustand zum Zeitpunkt T2 erfolgt ein Austausch der Zuordnungen der logischen Page 2 mit dem Buffer-Speicher B, d.h. die Zuordnungen logische Page 1 → physikalische Page 1', logische Page 2 → physikalische Page 2', Buffer-Speicher B → physikalische Page 3' und logische Page 3 → physikalische Page 4' im Zustand zum Zeitpunkt T1 führen zu den Zuordnungen logische Page 1 → physikalische Page 1', Buffer-Speicher B → physikalische Page 2', logische Page 2 → physikalische Page 3' und logische Page 3 → physikalische Page 4' im Zustand zum Zeitpunkt T2. Der Fachmann wird erkennen, dass nunmehr im Zustand zum Zeitpunkt T2 die physikalische Page 2' nicht durch Speicheroperationen abgenutzt wird, da in diesem Zustand der Buffer-Speicher B der physikalischen Page 2' zugeordnet ist und, wie bereits vorstehend beschrieben, ein Zugriff auf den Buffer-Speicher B durch eine auf der Prozessoreinheit 24 laufende Anwendung nicht möglich ist.

Bei dem in Figur 2 dargestellten Übergang vom Zustand zum Zeitpunkt T2 zum Zustand zum Zeitpunkt T3 erfolgt ein Austausch der Zuordnungen der logischen Page 1 mit dem Buffer-Speicher B, d.h. die Zuordnungen logische Page 1 → physikalische Page 1', Buffer-Speicher B → physikalische Page 2', logische Page 2 → physikalische Page 3' und logische Page 3 → physikalische Page 4' im Zustand zum Zeitpunkt T2 führen zu den Zuordnungen Buffer-Speicher B → physikalische Page 1', logische Page 1 → physikalische Page 2', logische Page 2 → physikalische Page 3' und logische Page 3 → physikalische Page 4' im Zustand zum Zeitpunkt T3. Der Fachmann wird erkennen, dass nunmehr im Zustand zum Zeitpunkt T3 die physikalische Page 1' nicht durch Speicheroperationen abgenutzt wird, da in diesem Zustand der Buffer-Speicher B der physikalischen Page 1' zugeordnet ist und, wie bereits vorstehend beschrieben, ein Zugriff auf den Buffer-Speicher B durch eine auf der Prozessoreinheit 24 laufende Anwendung nicht möglich ist.

Wie der Fachmann erkennt, muss die vorstehend beschriebene Regel bei dem in Figur 2 dargestellten Zustand zum Zeitpunkt T3 erweitert werden, da der Buffer-Speicher B sich bereits an der niedrigsten Stelle befindet und somit nicht weiter in Richtung niedriger liegender logischer Pages wandern kann. Erfindungsgemäß kann nun diese Regel sowohl derart erweitert werden, dass sich die "Bewegungsrichtung" des Buffer-Speichers B umkehrt, d.h. dass sich der Buffer-Speicher B in Richtung höher liegender logischer Pages bewegt, als auch derart, dass der Buffer-Speicher B den Platz mit der nunmehr am höchsten liegenden logischen Page (im Fall von Figur 2 die logische Page 3) tauscht. Die zweite bevorzugte Alternative ist in Figur 2 dargestellt.

Bei dem in Figur 2 dargestellten Übergang vom Zustand zum Zeitpunkt T3 zum Zustand zum Zeitpunkt T4 erfolgt somit ein Austausch der Zuordnungen des Buffer-Speichers B mit der logischen Page 3, d.h. die Zuordnungen Buffer-Speicher B → physikalische Page 1', logische Page 1 → physikalische Page 2', logische Page 2 → physikalische Page 3' und logische Page 3 → physikalische Page 4' im Zustand zum Zeitpunkt T3 führen zu den Zuordnungen logische Page 3 → physikalische Page 1', logische Page 1 → physikalische Page 2', logische Page 2 → physikalische Page 3' und Buffer-Speicher B → physikalische Page 4' im Zustand zum Zeitpunkt T4. Der Fachmann wird erkennen, dass nunmehr im Zustand zum Zeitpunkt T4 wiederum die physikalische Page 4', wie im Zustand zum Zeitpunkt T1, nicht durch Speicheroperationen abgenutzt wird, da in diesem Zustand der Buffer-Speicher B der physikalischen Page 4' zugeordnet ist und, wie bereits vorstehend beschrieben, ein Zugriff auf den Buffer-Speicher B durch eine auf der Prozessoreinheit 24 laufende Anwendung nicht möglich ist.

Der Fachmann wird erkennen, dass der Buffer-Speicher B in Figur 2 beim Durchlaufen der Zustände zu den Zeitpunkten T0 bis T4 sozusagen einmal das gesamte Speichersystem 28 durchwandert. Obwohl im Zustand zum Zeitpunkt T4 der Buffer-Speicher B wiederum der physikalischen Page 4' zugeordnet ist, unterscheidet sich der Zustand zum Zeitpunkt T4 jedoch von dem Zustand zum Zeitpunkt T1 in den Zuordnungen der logischen Pages 1 bis 3 zu den physikalischen Pages 1' bis 3'. Bei einem weiteren Durchlauf des Buffer-Speichers B durch das Speichersystem 28 werden diese Zuordnungen wieder anders sein, so dass auch die logischen Pages 1 bis 3 jeweils das gesamte Speichersystem 28 durchlaufen, jedoch mit einer kleineren "Geschwindigkeit" als der Buffer-Speicher B. Dieser von der hier beschriebenen bevorzugten Ausführungsform hervorgerufene Effekt ist insofern vorteilhaft, als, wenn beispielsweise häufig auf die logische Page 1 zugegriffen wird, dann diese Speicheroperationen auf alle physikalischen Pages 1' bis 4' des Speichersystems 28 gleichmäßig verteilt werden, denen die logische Page 1 gemäß dem erfindungsgemäßen Verfahren zugeordnet wird, und somit ein effizientes "Wear Levelling" erreicht wird.

Wie der Fachmann erkennen wird, gibt es unterschiedliche erfindungsgemäße Arten und Weisen, wie die Übergänge zwischen den in Figur 2 dargestellten Zuständen angestoßen werden können. Es ist beispielsweise denkbar, dass ein Zustandsübergang dadurch getriggert wird, dass die Anzahl der Zugriffe auf das Speichersystem 28 seit dem letzten Zustandsübergang einen festgelegten Schwellenwert erreicht oder übersteigt. Beispielsweise könnte nach 1,10,1000 oder 10000 Speicherzugriffen seit dem letzten Zustandsübergang ein Übergang zu einem neuen Zustand durchgeführt werden, um, wie vorstehend beschrieben, mittels des erfindungsgemäßen Verfahrens die Zuordnungen zwischen den logischen und physikalischen Pages zu ändern und somit die Abnutzung des Speichersystems 28 über alle physikalischen Pages gleichmäßig zu verteilen.

Gemäß einer bevorzugten Ausführungsform der Erfindung kann der Buffer-Speicher B als Zwischenspeicher zur Durchführung von atomaren Schreibvorgängen im Speichersystem 28 verwendet werden. Bei dieser bevorzugten Ausgestaltung werden, falls eine logische Page mit neuen Daten beschrieben werden soll, die Daten der physikalischen Page, die dieser logischen Page zugeordnet ist, in die physikalische Page kopiert, der der Buffer-Speicher B zugeordnet ist. Sollte beim Schreiben der neuen Daten in die logische Page bzw. die entsprechende physikalische Page ein Fehler auftreten, kann wieder auf die Daten zurückgegriffen werden, die in die physikalische Page kopiert worden sind, der der Buffer-Speicher B zugeordnet ist. Wie dies bereits vorstehend beschrieben worden ist, enthält jede physikalische Page vorzugsweise ein Kontrollattribut, das neben Informationen über den Typ der logischen Page, die momentan dieser physikalischen Page zugeordnet ist, und die Nummer der entsprechenden logischen Page Informationen darüber enthält, ob die entsprechende logische Page für atomare Schreibvorgänge verwendet werden kann oder die dort vorliegenden Daten noch gesichert werden müssen, und zwar für den Fall, dass die einer physikalischen Page zugeordnete logische Page den Buffer-Speicher B bildet oder Teil dieses Buffer-Speichers B ist.

Obwohl bei der in Figur 2 dargestellten bevorzugten Ausführungsform der Buffer-Speicher B durch lediglich eine Page ausgebildet wird, ist es erfindungsgemäß ebenfalls vorstellbar, dass der Buffer-Speicher B aus mehreren Pages besteht, die vorzugsweise zusammenhängen, aber auch über das Speichersystem 28 verstreut sein können. Der Fachmann wird jedoch erkennen, dass mit zunehmender Größe des Buffer-Speichers B der von der Prozessoreinheit 24 adressierbare Teil des Speichersystems 28 kleiner wird.

Der Fachmann wird erkennen, dass das erfindungsgemäße Verfahren auf alle physikalischen Pages eines Flash-Speichersystems oder nur auf einen Teil davon vorteilhaft angewendet werden kann. Erfindungsgemäß ist es beispielsweise vorstellbar, dass ein erster Teil eines Flash-Speichersystems zur Speicherung veränderlicher Daten und ein zweiter Teil des Flash-Speichersystems zur Speicherung von unveränderlichem Applikationscode verwendet werden. In diesem Fall ist es vorteilhaft, dass erfindungsgemäße Verfahren nur mit den Pages des ersten Teils des Flash-Speichersystems zur Speicherung von veränderlichen Daten durchzuführen.

## Patentansprüche

1. Verfahren zum Betreiben eines wieder beschreibbaren, nichtflüchtigen Speichersystems (28) mit einer Vielzahl von physikalischen Pages (1'-4'), wobei das Verfahren die folgenden Schritte umfasst:
in einem ersten Zustand das Zuordnen jeweils einer logischen Page (1-3; B) einer Vielzahl von logischen Pages zu jeweils einer physikalischen Page zumindest eines Teils der Vielzahl von physikalischen Pages,
wobei die Vielzahl von logischen Pages aus logischen Pages (1-3), auf welche eine Anwendung zugreifen kann, und aus wenigstens einer logischen Page (B) besteht, auf welche die Anwendung nicht zugreifen kann,
wobei eine der logischen Pages (1-3), auf welche die Anwendung zugreifen kann, als Referenzpage (1) dient und die wenigstens eine logische Page (B), auf welche die Anwendung nicht zugreifen kann, als Buffer-Speicher (B) dient; und
in späteren Zuständen das Ändern der Zuordnungen der logischen Pages (1-3; B) zu den physikalischen Pages zumindest eines Teils der Vielzahl von physikalischen Pages gemäß einer feststehenden Regel, mittels der sich in jedem der späteren Zustände die aktuellen Zuordnungen der logischen Pages (1-3; B) zu den physikalischen Pages zumindest eines Teils der Vielzahl von physikalischen Pages aus den aktuellen Zuordnungen der Referenzpage (1) und des Buffer-Speichers (B) zu den physikalischen Pages zumindest eines Teils der Vielzahl von physikalischen Pages ableiten lassen, **dadurch gekennzeichnet dass** der Buffer-Speicher (B) eine logische Page ist, welche für die Anwendung nicht sichtbar ist und somit von der Anwendung auf den Buffer-Speicher (B) nicht zugegriffen werden kann. Schreibzugriffe auf die logischen Pages (1-3;B) so verteilt werden, dass jede physikalische Page (1'-4') gleich häufig beschrieben wird, indem die Zuordnungen zwischen den logischen Pages (1-3;B) und den physikalischen Pages (1'-4') nach einer bestimmten Regel so geändert wird, dass jede logische Page (1-3;B) jeder physikalischen Page (1'-4') wenigstens einmal zugeordnet wird, sodass eine Abnutzung durch Speicherzugriffe über alle physikalischen Pages (1'-4') gleich verteilt wird.

2. Verfahren nach Anspruch 1, wobei die Zuordnungen der logischen Pages (1-3; B) zu den physikalischen Pages zumindest eines Teils der Vielzahl von physikalischen Pages gemäß einer feststehenden Regel derart geändert werden, dass über einen durch die Zustände definierten Zeitraum der Buffer-Speicher (B) jeweils im Wesentlichen sämtlichen physikalischen Pages zumindest eines Teils der Vielzahl von physikalischen Pages wenigstens einmal zugeordnet wird.

3. Verfahren nach Anspruch 1 oder Anspruch 2, wobei die Zuordnungen der logischen Pages (1-3; B) zu den physikalischen Pages zumindest eines Teils der Vielzahl von physikalischen Pages gemäß einer feststehenden Regel derart geändert werden, dass über einen durch die Zustände definierten Zeitraum die logischen Pages (1-3), auf welche die Anwendung zugreifen kann, jeweils im Wesentlichen sämtlichen physikalischen Pages zumindest eines Teils der Vielzahl von physikalischen Pages wenigstens einmal zugeordnet werden.

4. Verfahren nach Anspruch 1, wobei der Buffer-Speicher (B) aus zwei oder mehr logischen Pages besteht.

5. Verfahren nach Anspruch 1, wobei der Buffer-Speicher (B) als Zwischenspeicher zur Durchführung von atomaren Schreibvorgängen im Speichersystem (28) verwendet wird.

6. Verfahren nach Anspruch 1, wobei in den physikalischen Pages zumindest eines Teils der Vielzahl von physikalischen Pages jeweils ein Kontrollattribut hinterlegt ist, wobei das Kontrollattribut einer jeweiligen physikalischen Page zumindest eines Teils der Vielzahl von physikalischen Pages Informationen darüber enthält, ob es sich bei der dieser physikalischen Page zugeordneten logischen Page (1-3; B) um eine logische Page (1-3) handelt, auf welche die Anwendung zugreifen kann, oder um eine logische Page (B), die den Buffer-Speicher (B) bildet oder Teil dieses Buffer-Speichers (B) ist, welche logische Page (1-3; B) dieser physikalischen Page zugeordnet ist und/oder ob die dieser physikalischen Page zugeordnete logische Page (1-3; B) für atomare Schreibvorgänge verwendet werden kann oder die dort vorliegenden Daten noch gesichert werden müssen.

7. Verfahren nach Anspruch 1, wobei die Regel, mittels der sich zu jedem der späteren Zeitpunkte die aktuellen Zuordnungen der logischen Pages (1-3; B) zu den physikalischen Pages zumindest eines Teils der Vielzahl von physikalischen Pages aus den aktuellen Zuordnungen der Referenzpage (1) und des Buffer-Speichers (B) zu den physikalischen Pages ableiten lassen, darin besteht, dass bei jedem Zustandsübergang der Buffer-Speicher (B) der physikalischen Page zugeordnet wird, der bisher die nächst niedriger liegende logische Page (1-3) zugeordnet gewesen ist, und umgekehrt, und dass, falls sich der Buffer-Speicher (B) bereits an der niedrigsten Stelle befindet und somit nicht weiter in Richtung niedriger liegender logischer Pages (1-3) wandern kann, der Buffer-Speicher (B) die Zuordnung mit der nunmehr am höchsten liegenden logischen Page (1-3) tauscht.

8. Verfahren nach Anspruch 1, wobei die Anwendung auf einer Prozessoreinheit (24) läuft.

9. Verfahren nach Anspruch 1, wobei ein Teil der Vielzahl von physikalischen Pages (1'-4') zur Speicherung von veränderlichen Daten und ein anderer Teil der Vielzahl von physikalischen Pages (1'-4') zur Speicherung von unveränderlichen Daten, insbesondere Applikationscode, verwendet werden.

10. Speichersystem (28), das wieder beschreibbar und nichtflüchtig ist und gemäß einem Verfahren nach einem der vorhergehenden Ansprüche betrieben wird.

11. Speichersystem (28) nach Anspruch 10, wobei das Speichersystem (28) als Flash-Speichersystem ausgestaltet ist.

12. Sicherheitselement (20) mit einer Prozessoreinheit (24) und einem Speichersystem (28) nach Anspruch 10 oder 11.

## Claims

1. A method for operating a rewritable, non-volatile memory system (28) having a plurality of physical pages (1'-4'), wherein the method comprises the following steps:
in a first state, associating respectively one logical page (1-3; B) of a plurality of logical pages with respectively one physical page of at least a part of the plurality of physical pages,
wherein the plurality of logical pages consists of logical pages (1-3) which an application can access and of at least one logical page (B) which the application cannot access,
wherein one of the logical pages (1-3) which the application can access serves as a reference page (1) and the at least one logical page (B) which the application cannot access serves as a buffer memory (B); and
in later states, changing the associations of the logical pages (1-3; B) with the physical pages of at least a part of the plurality of physical pages according to an established rule by means of which in each of the later states the current associations of the logical pages (1-3; B) with the physical pages of at least a part of the plurality of physical pages can be derived from the current associations of the reference page (1) and of the buffer memory (B) with the physical pages of at least a part of the plurality of physical pages,
**characterized in that**
the buffer memory (B) is a logical page which is not visible to the application and thus the buffer memory (B) cannot be accessed by the application,
write accesses to the logical pages (1-3; B) are distributed such that each physical page (1'-4') is written on equally often, by the associations between the logical pages (1-3; B) and the physical pages (1'-4') being changed according to a particular rule such that each logical page (1-3; B) is associated with each physical page (1'-4') at least once, so that wear caused by memory accesses is uniformly distributed over all the physical pages (1-4').

2. The method according to claim 1, wherein the associations of the logical pages (1-3; B) with the physical pages of at least a part of the plurality of physical pages can be changed according to an established rule such that over a time period defined by the states the buffer memory (B) is associated at least once with respectively substantially each one of the physical pages of at least a part of the plurality of physical pages.

3. The method according to claim 1 or claim 2, wherein the associations of the logical pages (1-3; B) with the physical pages of at least a part of the plurality of physical pages can be changed according to an established rule such that over a time period defined by the states the logical pages (1-3) which the application can access are associated at least once with respectively substantially each one of the physical pages of at least a part of the plurality of physical pages.

4. The method according to claim 1, wherein the buffer memory (B) consists of two or more logical pages.

5. The method according to claim 1, wherein the buffer memory (B) is used as an intermediate memory for performing atomic writing operations in the memory system (28).

6. The method according to claim 1, wherein the physical pages of at least a part of the plurality of physical pages have respectively one control attribute deposited therein, wherein the control attribute of a respective physical page of at least a part of the plurality of physical pages contains information about whether the logical page (1-3; B) associated with this physical page is a logical page (1-3; B) which the application can access, or is a logical page (B) which forms the buffer memory (B) or is part of this buffer memory (B), which logical page (1-3; B) is associated with this physical page, and/or whether the logical page (1-3; B) associated with this physical page can be used for atomic writing operations, or the data being present there still have to be saved.

7. The method according to claim 1, wherein the rule, by means of which at each of the later times the current associations of the logical pages (1-3; B) with the physical pages of at least a part of the plurality of physical pages can be derived from the current associations of the reference page (1) and of the buffer memory (B) with the physical pages, consists in the fact that upon each state transition the buffer memory (B) is associated with the physical page which hitherto had associated therewith the logical page (1-3) lying next lower, and vice versa, and that if the buffer memory (B) is already at the lowest place and thus cannot move any further in the direction of logical pages (1-3) lying lower, the buffer memory (B) exchanges the association with the logical page (1-3) lying highest now.

8. The method according to claim 1, wherein the application runs on a processor unit (24).

9. The method according to claim 1, wherein a part of the plurality of physical pages (1'-4') is used for the storage of variable data and a different part of the plurality of physical pages (1'-4') for the storage of invariable data, in particular application code.

10. A memory system (28) which is rewritable and non-volatile and is operated according to a method after any of the preceding claims.

11. The memory system (28) according to claim 10, wherein the memory system (28) is configured as a flash memory system.

12. A security element (20) with a processor unit (24) and a memory system (28) according to claim 10 or 11.

## Revendications

1. Procédé de fonctionnement d'un système de mémoire (28) réinscriptible non volatile ayant une pluralité de pages physiques (1'-4'), le procédé comprenant les étapes suivantes :
dans un premier état, l'affectation de respectivement une page logique (1-3; B) d'une pluralité de pages logiques à respectivement une page physique d'au moins une partie de la pluralité de pages physiques,
cependant que la pluralité de pages logiques consiste en des pages logiques (1-3) auxquelles une application peut accéder et en au moins une page logique (B) à laquelle l'application ne peut pas accéder,
cependant qu'une des pages logiques (1-3) à laquelle l'application peut accéder sert de page de référence (1), et que la au moins une page logique (B) à laquelle l'application ne peut pas accéder sert de mémoire buffer (B) ; et
dans des états ultérieurs, la modification des affectations des pages logiques (1-3; B) aux pages physiques d'au moins une partie de la pluralité de pages physiques suivant une règle fixe au moyen de laquelle, dans chacun des états ultérieurs, les affectations actuelles des pages logiques (1-3; B) aux pages physiques d'au moins une partie de la pluralité de pages physiques peuvent être déduites à partir des affectations actuelles de la page de référence (1) et de la mémoire buffer (B) aux pages physiques d'au moins une partie de la pluralité de pages physiques,
**caractérisé en ce que**
la mémoire buffer (B) est une page logique qui, pour l'application, n'est pas visible et que, par conséquent, de la part de l'application, il n'est pas possible d'accéder à la mémoire buffer (B),
des accès en écriture aux pages logiques (1-3;B) sont répartis de telle façon que chaque page physique (1 '-4') est mise en écriture aussi fréquemment, ce qui a lieu **en ce que** les affectations entre les pages logiques (1-3;B) et les pages physiques (1 '-4') sont modifiées de telle manière suivant une règle déterminée que chaque page logique (1-3;B) est affectée au moins une fois à chaque page physique (1'-4'), de telle sorte qu'une usure par accès en mémoire est répartie de manière égale sur toutes les pages physiques (1'-4').

2. Procédé selon la revendication 1, cependant que les affectations des pages logiques (1-3; B) aux pages physiques d'au moins une partie de la pluralité de pages physiques sont modifiées de telle manière suivant une règle fixe que, pour une période de temps définie par les états, la mémoire buffer (B) est, respectivement essentiellement, affectée au moins une fois à toutes les pages physiques d'au moins une partie de la pluralité de pages physiques.

3. Procédé selon la revendication 1 ou la revendication 2, cependant que les affectations des pages logiques (1-3; B) aux pages physiques d'au moins une partie de la pluralité de pages physiques sont modifiées de telle manière suivant une règle fixe que, pour une période de temps définie par les états, les pages logiques (1-3) auxquelles l'application peut accéder sont, respectivement essentiellement, affectées au moins une fois à toutes les pages physiques d'au moins une partie de la pluralité de pages physiques.

4. Procédé selon la revendication 1, cependant que la mémoire buffer (B) consiste en deux ou davantage pages logiques.

5. Procédé selon la revendication 1, cependant que la mémoire buffer (B) est utilisée comme mémoire tampon pour l'exécution de processus atomiques d'écriture dans le système de mémoire (28).

6. Procédé selon la revendication 1, cependant que, dans les pages physiques d'au moins une partie de la pluralité de pages physiques, respectivement un attribut de contrôle est stocké, cependant que l'attribut de contrôle d'une page physique respective d'au moins une partie de la pluralité de pages physiques contient des informations indiquant si la page logique (1-3; B) affectée à cette page physique consiste en une page logique (1-3) à laquelle l'application peut accéder, ou en une page logique (B) qui constitue la mémoire buffer (B) ou est une partie de cette mémoire buffer (B), quelle page logique (1-3; B) est affectée à cette page physique, et/ou si la page logique (1-3; B) affectée à cette page physique peut être utilisée pour des processus atomiques d'écriture ou si les données s'y trouvant doivent encore être sauvegardées.

7. Procédé selon la revendication 1, cependant que la règle au moyen de laquelle, dans chacun des états ultérieurs, les affectations actuelles des pages logiques (1-3; B) aux pages physiques d'au moins une partie de la pluralité de pages physiques peuvent être déduites à partir des affectations actuelles de la page de référence (1) et de la mémoire buffer (B) aux pages physiques consiste en ce que, à chaque transition d'état, la mémoire buffer (B) est affectée à la page physique à laquelle, jusque là, la page (1-3) logique dont l'emplacement est immédiatement plus bas a été affectée, et inversement, et en ce que, dans le cas où la mémoire buffer (B) se trouve déjà à l'emplacement le plus bas et ne peut donc pas continuer à avancer en direction de pages (1-3) logiques se trouvant plus en bas, la mémoire buffer (B) échange l'affectation avec la page (1-3) logique dont l'emplacement est maintenant le plus haut.

8. Procédé selon la revendication 1, cependant que l'application se déroule sur une unité de processeur (24).

9. Procédé selon la revendication 1, cependant qu'une partie de la pluralité de pages physiques (1'-4') sont utilisées pour la mise en mémoire de données qui varient, et qu'une autre partie de la pluralité de pages physiques (1'-4') sont utilisées pour la mise en mémoire de données qui ne varient pas, en particulier de code d'application.

10. Système de mémoire (28) qui est réinscriptible et non volatile et est exploité suivant un procédé selon une des revendications précédentes.

11. Système de mémoire (28) selon la revendication 10, cependant que le système de mémoire (28) est réalisé sous forme de système de mémoire flash.

12. Elément de sécurité (20) doté d'une unité de processeur (24) et d'un système de mémoire (28) selon la revendication 10 ou 11.
